# EUROPEAN PATENT SPECIFICATION

(11) **EP 3 647 352 B1**
(45) Date of publication and mention of the grant of the patent: **07.04.2021**
(21) Application number: 19203083.1
(22) Date of filing: 14.10.2019
(51) Int. Cl.: C08L 9/06, B60C 1/00

(54) **RUBBER COMPOSITION FOR TIRE TREAD AND TIRE MANUFACTURED BY USING SAME**
KAUTSCHUKZUSAMMENSETZUNG FÜR REIFENLAUFFLÄCHE UND UNTER VERWENDUNG DERSELBEN HERGESTELLTER REIFEN
COMPOSITION DE CAOUTCHOUC POUR CHAPE DE PNEUMATIQUE ET PNEUMATIQUE FABRIQUÉ EN L'UTILISANT

(30) Priority: 29.10.2018 KR 20180129597
(43) Date of publication of application: 06.05.2020
(73) Proprietor: HANKOOK TIRE & TECHNOLOGY CO., LTD, Gangnam-gu Seoul 06133 (KR)
(72) Inventor: Lim, Kiwon, 28340 Chungcheongbuk-do (KR)
(74) Representative: Petraz, Gilberto Luigi

(56) References cited:
- EP-A1- 2 103 650
- EP-A1- 2 289 712
- EP-A1- 3 127 712
- EP-A1- 3 299 413
- EP-A1- 3 327 080
- EP-A1- 3 351 405
- EP-A1- 3 378 892
- EP-A1- 3 572 458
- KR-B1- 101 457 866
- US-A1- 2014 155 520
- US-A1- 2015 126 643

## Description

### BACKGROUND OF THE INVENTION

### 1. Field of the invention

The present disclosure relates to a rubber composition for tire tread and a tire manufactured by using the same, and more specifically, to a rubber composition for tire tread, the rubber composition which maintains low fuel consumption performance and improves braking performance and handling performance on extremely dry and wet road surfaces, and a tire manufactured by using the same.

### 2. Description of related art

Recently, consumers have been requesting high performance of a tire at the same time due to high performance of automobiles. Particularly, request for low fuel consumption performance is considerably high by the introduction of braking performance and handling performance on extremely dry and wet road surfaces and a global labeling system in case of high-performance tuning car and sport car. Accordingly, application of a new concept material has been actively considered as a demand for tires having all of abrasion resistance, handling and riding performance, wet braking properties and low fuel consumption properties.

Further, a lot of development of tire techniques having abrasion resistance, braking properties, handling and riding performance, and low fuel consumption properties of such tires at the same time has been made particularly in a material field.

In general, a method of reducing hysteresis loss by decreasing amount of a reinforcing filler such as silica or the like has been used as a technique of decreasing rolling resistance associated with fuel efficiency performance of a tire. However, the technique has a disadvantage of decreasing braking performance and steering stability performance on a wet road surface, i.e., important properties of a tire tread according as amount of the reinforcing filler is reduced.

As described above, a case that braking performance on a wet road surface is rather lowered is generated when fuel efficiency performance of the tire is generally improved in a current tire material developing technique, while a case that fuel efficiency performance becomes disadvantageous is generated when braking performance of the tire on the wet road surface is improved.

Since performances of the tire each show a phenomenon that the other performance is lowered when one of the performances is improved in this way, development of a technique which is capable of minimizing a drop in the other performance while improving one performance, or capable of improving two performances at the same time has been required.

### [Related art document]

### [Patent document]

(Patent document 1) Korean Patent Laid-Open Publication No. 10-2011-0071607
(Patent document 2) European Patent Laid-Open Publication No. 3127712
(Patent document 3) Korean Patent No. 101457866
(Patent document 4) United States Patent Laid-Open Publication No. 2015/126643
(Patent document 5) European Patent Laid-Open Publication No. 3327080
(Patent document 6) European Patent Laid-Open Publication No. 3351405
(Patent document 7) European Patent Laid-Open Publication No. 3378892
(Patent document 8) United States Patent Laid-Open Publication No. 2014/155520
(Patent document 9) European Patent Laid-Open Publication No. 3299413
(Patent document 10) European Patent Laid-Open Publication No. 2103650
(Patent document 11) European Patent Laid-Open Publication No. 2289712
(Patent document 12) European Patent Laid-Open Publication No. 3572458

EP3127712, KR101457866 and US2015/126643 disclose rubber compositions for a tire tread comprising raw rubber, silica and a resin having a softening point of 100 to 150°C. The raw rubber includes a solution-polymerized styrene butadiene rubber comprising 8 to 30 wt% of styrene, having 20 to 35 wt% of vinyl contained in butadiene, and having a molecular weight distribution of 2 to 5.

EP3327080, EP3351405, EP3378892, US2014/155520, EP3299413, EP2103650, EP2289712 and EP3572458 all disclose rubber compositions which can be improved.

### SUMMARY OF THE INVENTION

An objective of the present disclosure is to provide a rubber composition for tire tread, the rubber composition which maintains low fuel consumption performance, and improves braking performance and handling performance on extremely dry and wet road surfaces.

The other objective of the present disclosure is to provide a tire manufactured by using the rubber composition for tire tread.

In order to accomplish the objectives, a rubber composition for tire tread according to an aspect of the present disclosure comprises 100 parts by weight of raw rubber, 100 to 150 parts by weight of silica, and 15 to 60 parts by weight of resin having a softening point of 100 to 150 °C.

The raw rubber includes a solution-polymerized styrene butadiene rubber comprising 8 to 30 wt% of styrene, having 20 to 35 wt% of vinyl contained in butadiene, and having a molecular weight distribution of 2 to 5.

The solution-polymerized styrene butadiene rubber has a glass transition temperature (Tg) of -70 to -30 °C, and the Tg may be a Tg of a case that 10 to 40 parts by weight of oil are added to 100 parts by weight of the solution-polymerized styrene butadiene rubber. The raw rubber consists of the solution-polymerized styrene butadiene rubber, consisting of two kinds of solution-polymerized styrene butadiene rubber with the different vinyl amount.

The silica may have a nitrogen adsorption specific surface area of 150 to 300 m²/g, a CTAB adsorption specific surface area of 140 to 280 m²/g, and a hydrogen ion exponent of pH 5 to pH 8.

The resin may include 5 to 25 parts by weight of a first resin having a softening point of 110 to 150 °C and 10 to 40 parts by weight of a second resin having a softening point of 100 to 130 °C, and a weight ratio of the first resin to the second resin may be 1:1 to 1:5.

The rubber composition for tire tread may further comprise 5 to 15 parts by weight of a silane coupling agent with respect to 100 parts by weight of the raw rubber.

The silane coupling agent includes a sulfide-based silane compound and a mercapto-based silane compound, and a weight ratio of the sulfide-based silane compound to the mercapto-based silane compound may be 1:1 to 1:2.

A tire according to the other aspect of the present disclosure is manufactured by using the rubber composition for tire tread.

A rubber composition for tire tread according to the present disclosure may provide a tire which has improved braking performance and handling performance on extremely dry and wet road surfaces while maintaining excellent low fuel consumption performance.

### DETAILED DESCRIPTION OF THE INVENTION

Hereinafter, the present disclosure will be described in more detail.

A rubber composition for tire tread according to an embodiment of the present disclosure comprises 100 parts by weight of raw rubber, 100 to 150 parts by weight of silica, and 15 to 60 parts by weight of resin.

The raw rubber includes a solution-polymerized styrene butadiene rubber (S-SBR). Particularly, a solution-polymerized styrene butadiene rubber having a peculiar structure and controlled physical properties is used as raw rubber such that a large amount of silica can be mixed with the raw rubber, and the raw rubber can provide a tire with improved braking performance and handling performance on a wet road surface without deteriorating various physical properties.

The solution-polymerized styrene butadiene rubber includes 8 to 30 wt% of styrene coupled based on the total solution-polymerized styrene butadiene rubber, includes 20 to 35 wt% of vinyl contained in butadiene based on the total solution-polymerized styrene butadiene rubber, and has a glass transition temperature (Tg) of -70 to -30 °C. The glass transition temperature (Tg) as -70 to -30 °C preferably has a relatively low numerical value. A glass transition temperature of the rubber composition increases too high since the styrene butadiene rubber is used along with resin having a glass transition temperature of room temperature or higher when styrene butadiene rubber having a high glass transition temperature is used. Therefore, a performance difference of the rubber composition according to air temperature may be larger, and may be disadvantageous in wear.

When contents and glass transition temperatures of coupled styrene and vinyl group of the solution-polymerized styrene butadiene rubber are controlled as described above, a large amount of silica can be uniformly mixed with the raw rubber. Further, a tire having excellent braking performance and handling performance on a wet road surface may be provided in the above-mentioned situation.

The solution-polymerized styrene butadiene rubber may be used in a state that oil is not added to the solution-polymerized styrene butadiene rubber or in a state that oil is added to the solution-polymerized styrene butadiene rubber. In one example, when oil is added to the solution-polymerized styrene butadiene rubber, oil may be added in an amount range of 10 to 40 parts by weight with respect to 100 parts by weight of the rubber. When oil is added to the solution-polymerized styrene butadiene rubber in the above-mentioned amount range, flexibility of the rubber lowered due to influence of a styrene structure can be supplemented.

For example, oil which can be added to the solution-polymerized styrene butadiene rubber may be treated distillate aromatic extract (TDAE) oil.

The glass transition temperature of the solution-polymerized styrene butadiene rubber means a glass transition temperature measured in a state that a predetermined amount of oil is added to the solution-polymerized styrene butadiene rubber. Therefore, although the solution-polymerized styrene butadiene rubber which is in a state that oil is not added to the rubber is used, the glass transition temperature of the solution-polymerized styrene butadiene rubber can be measured after taking out a portion of the solution-polymerized styrene butadiene rubber and mixing the portion of the solution-polymerized styrene butadiene rubber with a predetermined amount of oil when measuring the glass transition temperature.

For example, the solution-polymerized styrene butadiene rubber may be a solution-polymerized styrene butadiene rubber having a molecular weight distribution range of 2 to 5. The solution-polymerized styrene butadiene rubber having the foregoing molecular weight distribution range may give excellent processability to a rubber composition for tire tread. For example, the solution-polymerized styrene butadiene rubber may be manufactured by a continuous method in order to have a wide molecular weight distribution range as described above.

For example, the solution-polymerized styrene butadiene rubber may be used in a state that molecules are coupled by a coupling agent. When coupling the solution-polymerized styrene butadiene rubber, the number of ends of molecules, i.e., a cause of hysteresis loss can be reduced by connecting respective molecules through coupling. As a result, a rubber composition for tire tread with maximized low fuel consumption performance can be provided when a solution-polymerized styrene butadiene rubber in a coupled state is used. A coupling agent for coupling the solution-polymerized styrene butadiene rubber may include metals used in a technical field of the present disclosure without limitation, e.g., silicon (Si), tin (Sn), etc.

For example, the solution-polymerized styrene butadiene rubber may include an end-modified solution-polymerized styrene butadiene rubber. The end-modified solution-polymerized styrene butadiene rubber has an advantage that it can improve physical properties of rubber by increasing affinity between silica of which surface is hydrophilic and rubber which is hydrophobic, thereby improving dispersion of silica. A compound for modifying an end of the solution-polymerized styrene butadiene rubber may include compounds used in a technical field of the present disclosure without limitation, e.g., an amino silane-based compound, a glycidyl amino-based compound, etc.

The raw rubber may include one or more types of solution-polymerized styrene butadiene rubbers, or a mixture of the one or more types of solution-polymerized styrene butadiene rubbers and other rubber. In one example, the raw rubber may include 80 to 100 wt% of the solution-polymerized styrene butadiene rubber with respect to the total weight of the raw rubber.

A rubber composition for tire tread having improved braking performance and handling performance on a wet road surface may be produced in such an amount range.

The above-mentioned other rubber that may be mixed with the solution-polymerized styrene butadiene rubbers may include rubbers used in a tire rubber field without limitation.

For example, the other rubber may be any one selected from the group consisting of a natural rubber, a synthetic rubber, and a combination thereof.

The natural rubber may be a general natural rubber or a modified natural rubber.

The general natural rubber may include any rubbers which have been known as natural rubber without limiting place of origin or the like thereof. The natural rubber includes cis-1,4-polyisoprene as a main body, but may include trans-1,4-polyisoprene according to required characteristics. Therefore, the natural rubber may also include natural rubber including trans-1,4-isoprene as a main body, e.g., balata or the like, i.e., a type of South American Sapotaceae rubber besides the natural rubber including cis-1,4-polyisoprene as a main body.

The modified natural rubber means a natural rubber obtained by modifying or purifying the general natural rubber. For example, the modified natural rubber may include an epoxidized natural rubber (ENR), a deproteinized natural rubber (DPNR), a hydrogenated natural runner, etc.

The synthetic rubber may be any one selected from the group consisting of styrene butadiene rubber (SBR), modified styrene butadiene rubber, butadiene rubber (BR), modified butadiene rubber, chlorosulfonated polyethylene rubber, epichlorohydrin rubber, fluorine rubber, silicone rubber, nitrile rubber, hydrogenated nitrile rubber, nitrile butadiene rubber (NBR), modified nitrile butadiene rubber, chlorinated polyethylene rubber, styrene ethylene butylene styrene (SEBS) rubber, ethylene propylene rubber, ethylene propylene diene monomer (EPDM) rubber, Hypalon rubber, chloroprene rubber, ethylene vinyl acetate rubber, acrylic rubber, hydrin rubber, vinyl benzyl chloride styrene butadiene rubber, bromomethyl styrene butyl rubber, maleated styrene butadiene rubber, carboxylated styrene butadiene rubber, epoxy isoprene rubber, maleated ethylene propylene rubber, carboxylated nitrile butadiene rubber, brominated polyisobutyl isoprene-co-paramethyl styrene (BIMS), and combinations thereof.

In one example, the rubber mixed with the solution-polymerized styrene butadiene rubbers may include butadiene rubber.

For example, the butadiene rubber may be high cis-butadiene rubber having a cis-1,4-polybutadiene content of 96 wt% or more and a glass transition temperature (Tg) of -104 to -107 °C. Further, the butadiene rubber may be butadiene rubber having a Mooney viscosity of 43 to 47 at 100 °C. When the high cis-butadiene rubber is used, the high cis-butadiene rubber has an advantageous effect in terms of abrasion resistant performance and heat build up under dynamic stress.

For example, the butadiene rubber may be included in the raw rubber in an amount range of 0 to 20 wt% with respect to the total weight of the raw rubber. A rubber composition for tire tread exhibiting appropriate mechanical rigidity and abrasion resistance in such a range may be provided.

The rubber composition for tire tread comprises silica as a reinforcing filler. The silica may have a nitrogen adsorption specific surface area (nitrogen surface area per gram, N₂SA) of 150 to 300 m²/g and a CTAB (cetyltrimethylammonium bromide) adsorption specific surface area of 140 to 280 m²/g to obtain a rubber composition for tire tread suitable for purposes of the present disclosure. Such a silica has high dispersibility with respect to the raw rubber, and can give appropriate reinforcing performance and processability to the rubber composition for tire tread suitable.

Reinforcing performance of silica, i.e., a filler may become disadvantageous since handling performance and braking performance on a wet road surface are decreased by decreasing rigidity of a mixed rubber when the silica has a nitrogen adsorption specific surface area of less than 150 m²/g, while processability of the rubber composition may become disadvantageous since it is difficult to disperse silica, and various performances are decreased due to excessive improvement in rigidity when the silica has a nitrogen adsorption specific surface area of more than 300 m²/g. Further, reinforcing performance of silica, i.e., a filler may become disadvantageous since handling performance and braking performance on a wet road surface are decreased by decreasing rigidity of a mixed rubber when the silica has a CTAB adsorption specific surface area of less than 140 m²/g, while processability of the rubber composition may become disadvantageous since it is difficult to disperse silica, and various performances are decreased due to excessive improvement in rigidity when the silica has a CTAB adsorption specific surface area of more than 280 m²/g.

The silica may be used in an amount of 100 to 150 parts by weight or 110 to 140 parts by weight with respect to 100 parts by weight of the raw rubber. Generally, a large amount of silica is not uniformly mixed with the raw rubber, and it is very difficult to handle a rubber composition mixed with a large amount of silica in a plant. Therefore, a process of mixing the above-mentioned large amount of silica with the raw rubber has not been actually performed. However, the rubber composition for tire tread may comprise a large amount of silica by using the above-mentioned solution-polymerized styrene butadiene rubber as raw rubber. As a result, a rubber composition for tire tread having improved rigidity and excellent braking performance on a wet road surface without deteriorating various performances of a tire may be provided.

For example, silica may have a hydrogen ion exponent range of pH 5 to pH 8. Silica having such a hydrogen ion exponent range may be uniformly mixed with raw rubber without a problem of deteriorating physical properties of raw rubber.

The silica may be produced by a method known in the art such that the silica has the physical properties. For example, the silica may include silica produced by a wet type method or a dry type method.

The rubber composition for tire tread may further comprise a coupling agent to improve dispersibility of the silica and express reinforcing properties of the silica.

The coupling agent may be a silane coupling agent, and the silane coupling agent may include any one selected from the group consisting of a sulfide-based silane compound, a mercapto-based silane compound, a vinyl-based silane compound, an amino-based silane compound, a glycidoxy-based silane compound, a nitro-based silane compound, a chloro-based silane compound, a methacrylic silane compound and combinations thereof, preferably the sulfide-based silane compound, or a combination of the sulfide-based silane compound and the mercapto-based silane compound.

The sulfide-based silane compound may be any one selected from the group consisting of bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 2-trimethoxysilylethyl-N,N-dimethylthiocarbamoyltetrasulfide, 3-trimethoxysilylpropylbenzothiazolyltetrasulfide, 3-triethoxysilylpropylbenzothiazoltetrasulfide, 3-trimethoxysilylpropylmethacrylatemonosulfide, 3-triethoxysilylpropylmethacrylatemonosulfide, and combinations thereof.

The mercapto-based silane compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane, 3-mercaptopropyl-di(tridecane-1-oxy-13-penta(ethyleneoxide))methoxysilane, 3-mercaptopropyl-di(tridecane-1-oxy-13-penta(ethyleneoxide))ethoxysilane, 3-mercaptoethyl-di(tridecane-1-oxy-13-penta(ethyleneoxide))methoxysilane, 3-mercaptoethyl-di(tridecane-1-oxy-13-penta(ethyleneoxide))ethoxysilane, and combinations thereof. The amino-based silane compound may be any one selected from the group consisting of 3-aminopropyltriethoxysilane, 3-aminopropyltrimethoxysilane, 3-(2-aminoethyl)aminopropyltriethoxysilane, 3-(2-aminoethyl)aminopropyltrimethoxysilane, and combinations thereof.

The glycidoxy-based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane, and combinations thereof. The nitro-based silane compound may be any one selected from the group consisting of 3-nitropropyltrimethoxysilane, 3-nitropropyltriethoxysilane, and a combination thereof. The chloro-based silane compound may be any one selected from the group consisting of 3-chloropropyltrimethoxysilane, 3-chloropropyltriethoxysilane, 2-chloroethyltrimethoxysilane, 2-chloroethyltriethoxysilane, and combinations thereof.

The methacrylic silane compound may be any one selected from the group consisting of γ-methacryloxypropyl trimethoxysilane, γ-methacryloxypropyl methyldimethoxysilane, γ-methacryloxypropyl dimethylmethoxysilane, and combinations thereof.

The silane coupling agent may be included in an amount of 5 to 15 parts by weight with respect to 100 parts by weight of the raw rubber to improve dispersibility of the silica. Processability of rubber may be lowered, or low fuel consumption performance may be deteriorated since silica is short fall of improvement in dispersibility when the silane coupling agent is included in an amount of less than 5 parts by weight, while braking performance may be much deteriorated although low fuel consumption performance may be excellent since interaction between silica and rubber is too strong when the silane coupling agent is included in an amount of more than 15 parts by weight.

Further, when the silane coupling agent is a combination of the sulfide-based silane compound and the mercapto-based silane compound, the sulfide-based silane compound and the mercapto-based silane compound may be combined at a weight ratio of 1:1 to 1:2, and dispersibility and reactivity of silica may be improved when performing mixing and discharging processes at a high temperature of 160 °C or higher by applying the sulfide-based silane compound and the mercapto-based silane compound at the same time. Processability may be remarkably lowered due to a rubber agglomeration phenomenon caused by excessive reaction when performing a discharging process at a high temperature of 160 °C or higher when the weight ratio is less than 1:1, while there is a problem that a risk of generating a scorch phenomenon is increased when the weight ratio is more than 1:2.

The rubber composition for tire tread comprises resin with a high softening point. The resin gives rigidity to rubber manufactured from the rubber composition and can provide a tire having excellent braking performance and handling performance on a wet road surface.

The resin may be included in an amount range of 15 to 60 parts by weight with respect to 100 parts by weight of raw rubber. In such an amount range, the resin gives appropriate rigidity to tire rubber, and can provide the tire having excellent braking performance and handling performance on the wet road surface.

Further, the resin may have a Tg of 25 to 75 °C.

Further, the resin may have a Tg of 25 to 75 °C and a softening point of 100 to 150 °C. When resin having such ranges of Tg and softening point is used, a rubber composition for tire tread in which the resin is mixed at the softening point or higher during mixing within the resin composition to help improvement in processability, the resin is acted as a hard part even at room temperature and temperature during driving of a general tire to improve rigidity of rubber, and the resin has improved low fuel consumption performance by having high dispersibility can be provided. Rigidity of the rubber is decreased since the resin within the rubber composition is softened during driving, braking or handling of the tire when the resin has a softening point of less than 100 °C, while drop in processability and loss in abrasion performance may be caused since dispersibility during mixing is lowered when the resin has a softening point of more than 150 °C.

Further, the resin may simultaneously include 5 to 25 parts by weight of a first resin having a softening point of 110 to 150 °C and 10 to 40 parts by weight of a second resin having a softening point of 100 to 130 °C, and the first resin and the second resin are preferably used at a weight ratio of 1:1 to 1:5.

The resin may be disadvantageous to braking and handling performances due to rigidity and hysteresis decrease of the rubber composition when the weight ratio is less than 1:1, while there is a problem that abrasion and low rolling resistance (LRR) performance are deteriorated when the weight ratio is more than 1:5.

The first resin may be a silica-friendly phenolic resin. For example, the phenolic resin includes a novolac resin. The novolac resin means a product obtained by reacting phenols with aldehydes in the presence of an acid catalyst. Examples of the phenols may include phenol, cresol, resorcinol, etc., examples of the aldehydes may include formaldehyde, paraformaldehyde, benzaldehyde, etc., and examples of the acid catalyst may include oxalic acid, hydrochloric acid, sulfuric acid, p-toluenesulfonic acid, etc. However, the present disclosure is not limited thereto.

The second resin may be one of a polymer-friendly aliphatic resin, a naphthenic resin, and a combination thereof. Examples of the aliphatic resin may include C₅-based petroleum resins such as isoprene, and others, and examples of the naphthenic resin may include terpene-based resins, dicyclopentadiene (DCPE), etc., or may include a combination of the aliphatic resin and the naphthenic resin. However, the present disclosure is not limited thereto.

The rubber composition for tire tread may further comprise optionally additional various additives including a vulcanizing agent, a vulcanization accelerator, a vulcanization acceleration aid, a filler, an antiaging agent, a softener, an adhesive, etc. The various additives may include any additives which are generally used in the art to which the present disclosure pertains, and amounts of the additives are in accordance with a mixing ratio used in a general rubber composition for tire tread. Therefore, the amounts of the additives are not particularly limited.

The vulcanizing agent may preferably include a sulfur-based vulcanizing agent. The sulfur-based vulcanizing agent may include an inorganic vulcanizing agent such as sulfur (S) powder, insoluble sulfur (S), precipitated sulfur (S), colloidal sulfur, etc. Specifically, the sulfur-based vulcanizing agent may include a vulcanizing agent for producing element sulfur or sulfur, e.g., amine disulfide, polymer sulfur, etc.

The vulcanizing agent is preferably included in an amount of 0.5 to 4.0 parts by weight with respect to 100 parts by weight of the raw rubber in that the vulcanizing agent makes the raw rubber less sensitive to heat and allows the raw rubber to be chemically stable by having an appropriate vulcanizing effect.

The vulcanization accelerator means an accelerator which accelerates vulcanization rate or accelerates delayed action in an initial vulcanization step.

The vulcanization accelerator may include any one selected from the group consisting of a sulfenamide-based vulcanization accelerator, a thiazole-based vulcanization accelerator, a thiuram-based vulcanization accelerator, a thiourea-based vulcanization accelerator, a guanidine-based vulcanization accelerator, a dithiocarbamic acid-based vulcanization accelerator, an aldehyde-amine based vulcanization accelerator, an aldehyde-ammonia based vulcanization accelerator, an imidazoline-based vulcanization accelerator, a xanthate-based vulcanization accelerator, and combinations thereof.

For example, the sulfenamide-based vulcanization accelerator may include any one sulfenamide-based compound selected from the group consisting of N-cyclohexyl-2-benzothiazylsulfenamide (CBS), N-tert-butyl-2-benzothiazylsulfenamide (TBBS), N,N-dicyclohexyl-2-benzothiazylsulfenamide, N-oxydiethylene-2-benzothiazylsulfenamide, N,N-diisopropyl-2-benzothiazolesulfenamide, and combinations thereof.

For example, the thiazole-based vulcanization accelerator may include any one thiazole-based compound selected from the group consisting of 2-mercaptobenzothiazole (MBT), dibenzothiazyl disulfide (MBTS), a sodium salt of 2-mercaptobenzothiazole, a zinc salt of 2-mercaptobenzothiazole, a copper salt of 2-mercaptobenzothiazole, a cyclohexylamine salt of 2-mercaptobenzothiazole, 2-(2,4-dinitrophenyl)mercaptobenzothiazole, 2-(2,6-diethyl-4-morpholinothio)benzothiazole, and combinations thereof.

For example, the thiuram-based vulcanization accelerator may include any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof.

For example, the thiourea-based vulcanization accelerator may include any one thiourea-based compound selected from the group consisting of thiocarbamide, diethylthiourea, dibutylthiourea, trimethylthiourea, Di-o-tolylthiourea, and combinations thereof.

For example, the guanidine-based vulcanization accelerator may include any one guanidine-based compound selected from the group consisting of diphenylguanidine, Di-o-tolylguanidine, triphenylguanidine, o-Tolylbiguanide, diphenylguanidine phthalate, and combinations thereof.

For example, the dithiocarbamic acid-based vulcanization accelerator may include any one dithiocarbamic acid-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate. selenium dimethyldithiocarbamate, tellurium diethyldithiocarbamate, cadmium diamyldithiocarbamate, and combinations thereof.

For example, the aldehyde-amine or aldehyde-ammonia based vulcanization accelerator may include any one aldehyde-amine or aldehyde-ammonia based compound selected from the group consisting of an acetaldehyde-aniline reactant, a butylaldehyde-aniline condensate, hexamethylenetetramine, an acetaldehyde-ammonia reactant, and combinations thereof.

For example, the imidazoline-based vulcanization accelerator may include imidazoline-based compounds such as 2-mercaptoimidazoline, etc., and the xanthate-based vulcanization accelerator may include xanthate-based compounds such as zinc dibutylxanthate, etc.

The vulcanization accelerator may be included in an amount of 0.5 to 4.0 parts by weight with respect to 100 parts by weight of the raw rubber to maximize improvements in productivity and rubber physical properties through acceleration of vulcanization rate.

The vulcanization acceleration aid, as a compounding agent which is used in a combination with the vulcanization accelerator to complete its acceleration effect, may include any one selected from the group consisting of an inorganic vulcanization acceleration aid, an organic vulcanization acceleration aid, and a combination thereof.

The inorganic vulcanization acceleration aid may include any one selected from the group consisting of zinc oxide (ZnO), zinc carbonate, magnesium oxide (MgO), lead oxide, potassium hydroxide, and combinations thereof. The organic vulcanization acceleration aid may include any one selected from the group consisting of stearic acid, zinc stearate, palmitic acid, linoleic acid, oleic acid, lauric acid, dibutyl ammonium oleate, derivatives thereof, and combinations thereof.

Particularly, the zinc oxide and the stearic acid may be used together as the inorganic vulcanization acceleration aid. In this case, a crosslinking reaction of rubber is facilitated by dissolving the lead oxide in the stearic acid, thereby producing sulfur favorable to a vulcanization reaction by forming an effective complex with the vulcanization accelerator.

The zinc oxide and the stearic acid may respectively be used in amounts of 1 to 5 parts by weight and 0.5 to 3 parts by weight with respect to 100 parts by weight of the raw rubber in order to perform an appropriate role as the vulcanization acceleration aid when the zinc oxide and the stearic acid are used together. Productivity may be deteriorated since vulcanization rate is slow when the zinc oxide and the stearic acid are used in amounts less than the ranges, while physical properties may be lowered since a scorch phenomenon occurs when the zinc oxide and the stearic acid are used in amounts more than the ranges.

The rubber composition for tire tread may further comprise a general filler used in the art besides the silica. For example, the filler may be any one selected from the group consisting of carbon black, calcium carbonate, clay (hydrated aluminum silicate), aluminum hydroxide, lignin, silicate, talc, and combinations thereof.

Although the carbon black may have a nitrogen adsorption specific surface area (nitrogen surface area per gram, N₂SA) of 30 to 300 m²/g and a n-dibutyl phthalate (DBP) oil adsorption amount of 60 to 180 cc/100 g, the present disclosure is not limited thereto.

Processability of the rubber composition for tire tread may become disadvantageous when the carbon black has a nitrogen adsorption specific surface area of more than 300 m²/g, while reinforcing performance of the rubber composition may become disadvantageous due to carbon black, i.e., the filler when the carbon black has a nitrogen adsorption specific surface area of less than 30 m²/g. Further, processability of the rubber composition may be deteriorated when the carbon black has a DBP oil adsorption amount of more than 180 cc/100 g, while reinforcing performance of the rubber composition may become disadvantageous due to carbon black, i.e., the filler when the carbon black has a DBP oil adsorption amount of less than 60 cc/100 g.

Typical examples of the carbon black may include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990, N991, etc.

The carbon black may be included in an amount of 5 to 10 parts by weight with respect to 100 parts by weight of the raw rubber. Reinforcing performance of the rubber composition may be deteriorated by the carbon black, i.e., a filler when the carbon black is included in an amount of less than 5 parts by weight, while processability of the rubber composition may become disadvantageous when the carbon black is included in an amount of more than 10 parts by weight.

The softener which is added to the rubber composition to facilitate processing or lower hardness of vulcanized rubber by giving plasticity to rubber means other oil materials used during rubber mixing or rubber manufacturing. The softener means oils included in process oil or other rubber compositions. Although the softener may include any one selected from the group consisting of a petroleum-based oil, a vegetable oil, and a combination thereof, the present disclosure is not limited thereto.

The petroleum-based oil may include any one selected from the group consisting of a paraffin-based oil, a naphthene-based oil, an aromatic oil, and combinations thereof.

Typical examples of the paraffin-based oil may include P-1, P-2, P-3, P-4, P-5, P-6, etc. of Michang Oil Industry Co., Ltd., typical examples of the naphthene-based oil may include N-1, N-2, N-3, etc. of Michang Oil Industry Co., Ltd., and typical examples of the aromatic oil may include A-2, A-3, etc. of Michang Oil Industry Co., Ltd.

However, since a cancer-causing possibility has been known to be high when polycyclic aromatic hydrocarbons (hereinafter, referred to as 'PAHs') included in the aromatic oil have a content of 3 wt% or more along with a recent upsurge of environmental consciousness, the aromatic oil may preferably include a treated distillate aromatic extract (TDAE) oil, a mild extraction solvate (MES) oil, a residual aromatic extract (RAE) oil, or a heavy naphthenic oil.

Particularly, the softener may preferably include TDAE oil in which a PAHs component is included in a total amount of 3 wt% or less with respect to the total oil, which has a kinematic viscosity of 95 or more (210 °F SUS), and which comprises 15 to 25 wt% of an aromatic component, 27 to 37 wt% of a naphthenic component, and 38 to 58 wt% of a paraffinic component.

The TDAE oil has characteristics advantageous even to environmental factors such as a cancer-causing possibility of PAHs while enabling a tire tread including the TDAE oil to maintain excellent low temperature characteristics and fuel efficiency performance.

The vegetable oil may include any one selected from the group consisting of castor oil, cottonseed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, Macadamia Nut Oil, Carthamus Tinctorius (Safflower) Seed Oil, Chinese wood oil, and combinations thereof.

The softener is preferably included in an amount of 0 to 20 parts by weight with respect to 100 parts by weight of the raw rubber in that the softener improves processability of the raw rubber.

The antiaging agent is an additive which is used to stop a chain reaction in which a tire is automatically oxidized by oxygen. The antiaging agent may include any one appropriately selected from the group consisting of an amine-based antiaging agent, a phenolic antiaging agent, a quinoline-based antiaging agent, an imidazole-based antiaging agent, carbamate metal salt, wax, and combinations thereof.

The amine-based antiaging agent may include any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof. The phenolic antiaging agent may include any one selected from the group consisting of 2,2'-methylene-bis(4-methyl-6-tert-butylphenol), 2,2'-isobutylidene-bis(4,6-dimethylphenol), 2,6-di-t-butyl-p-cresol, and combinations thereof. The quinoline-based antiaging agent may include 2,2,4-trimethyl-1,2-dihydroquinoline and derivatives thereof, specifically any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof. The wax preferably includes waxy hydrocarbons.

The antiaging agent may be included in an amount of 1 to 10 parts by weight with respect to 100 parts by weight of the raw rubber considering conditions that the antiaging agent should have a high solubility for rubber besides an antiaging effect, should have a low volatility, should be inactive to rubber, and should not hinder vulcanization.

The adhesive contributes to improvement in physical properties of rubber by further improving tack performance between rubbers and improving mixability, dispersibility and processability of other additives including a filler.

The adhesive may include a natural resin-based adhesive such as a rosin-based resin or a terpene-based resin, and a synthetic resin-based adhesive such as petroleum resin, coal tar, alkyl phenolic resin, etc.

The rosin-based resin may be any one selected from the group consisting of a rosin resin, a rosin ester resin, a hydrogen-added rosin ester resin, derivatives thereof, and combinations thereof. The terpene-based resin may be any one selected from the group consisting of a terpene resin, a terpene phenol resin, and a combination thereof.

The petroleum resin may be any one selected from the group consisting of an aliphatic resin, an acid-modified aliphatic resin, an alicyclic resin, a hydrogen-added alicyclic resin, an aromatic (Cg) resin, a hydrogen-added aromatic resin, a C₅-C₉ copolymer resin, a styrene resin, a styrene copolymer resin, and combinations thereof.

The coal tar may be coumarone-indene resin.

The alkyl phenolic resin may be p-tert-alkylphenol formaldehyde resin or resorcinol formaldehyde resin, and the p-tert-alkylphenol formaldehyde resin may be any one selected from the group consisting of p-tert-butylphenol formaldehyde resin, p-tert-octyl phenol formaldehyde resin, and a combination thereof.

The adhesive may be included in an amount of 2 to 4 parts by weight with respect to 100 parts by weight of the raw rubber. Adhesion performance of the rubber may become disadvantageous when the adhesive is included in an amount of less than 2 parts by weight with respect to 100 parts by weight of the raw rubber, while physical properties of the rubber may be deteriorated when the adhesive is included in an amount of more than 4 parts by weight with respect to 100 parts by weight of the raw rubber.

The rubber composition for tire tread may be prepared through a continuous preparation process of general two steps. Namely, although the rubber composition for tire tread may be prepared in an appropriate mixer by using a first step of performing a thermomechanical treatment or kneading process at a maximum temperature ranging from 110 to 190 °C, preferably at a high temperature of 130 to 180 °C and a second step of performing a mechanical treatment process typically at less than 110 °C, e.g., at a low temperature of 40 to 100 °C while performing a finishing step of allowing a crosslinking system to be mixed, the present disclosure is not limited thereto.

The rubber composition for tire tread may be included in various rubber components composing a tire without being limited to tread (tread cap or tread base). The rubber components may include sidewalls, a sidewall insertion, an apex, a chafer, a wire coat, an inner liner, etc.

A tire according to another embodiment of the present disclosure is manufactured using the rubber composition for tire tread. Since any of the methods which have conventionally been used in manufacturing of the tire may be applicable if a method of manufacturing a tire using the rubber composition for tire tread includes methods which have conventionally been used in manufacturing of the tire, detailed description will be omitted in the present specification.

The tire may be a tire for passenger vehicles, a tire for racing cars, an aircraft tire, a tire for agricultural machines, a tire for off-the-road driving, a truck tire, a bus tire, or the like. Further, the tire may be a radial tire or a bias tire, and preferably is the radial tire.

Hereinafter, the embodiments of the present disclosure will be described in detail so that the present disclosure can be easily realized by those skilled in the art. However, the present disclosure can be implemented in various different forms and is not limited to the embodiments described herein.

**[Preparation Example: Preparation of rubber compositions]**

Rubber compositions for tire tread according to the following Examples and Comparative Examples were prepared using the same compositions as represented in the following Table 1. The rubber compositions were prepared according to a general rubber composition preparation method.

**[Table 1]**

| | | Comparative Example 1 | Comparative Example 2 | Example 1 | Example 2 | Example 3 | Example 4 | Example 5 | Example 6 |
|---|---|---|---|---|---|---|---|---|---|
| Raw rubber | S-SBR⁽¹⁾ | 60 (40) | | | | | | | |
| | S-SBR⁽²⁾ | 50 (40) | 112.5 (90) | 62.5 (50) | 62.5 (50) | | | | |
| | S-SBR⁽³⁾ | | | | | 50 (50) | 50 (50) | 50 (50) | 50 (50) |
| | S-SBR⁽⁴⁾ | | | 68.75 (50) | 68.75 (50) | 68.75 (50) | 68.75 (50) | 68.75 (50) | 68.75 (50) |
| | BR⁽⁵⁾ | 20 | 10 | | | | | | |
| Silica⁽⁶⁾ | | 110 | 120 | 120 | 120 | 130 | 130 | 135 | 135 |
| Carbon black | | 6.5 | 6.5 | 6.5 | 6.5 | 6.5 | 6.5 | 6.5 | 6.5 |
| Coupling agent⁽⁷⁾ | | 8.5 | 9.5 | 9.5 | 9.5 | 5 | 5 | 4.5 | 4.5 |
| Coupling agent⁽⁸⁾ | | | | | | 5 | 5 | 6.8 | 6.8 |
| First resin⁽⁹⁾ | | | 10 | | 20 | 20 | 15 | 10 | 15 |
| Second resin⁽¹⁰⁾ | | 10 | | 20 | | 20 | 25 | 35 | 35 |
| Processing aid | | 5 | 5 | | | | | | |
| Process oil | | 7 | 15 | 10 | 10 | 5 | 5 | 5 | 5 |
| Zinc oxide | | 2 | 2 | 1 | 1 | 1 | 1 | 1 | 1 |
| Stearic acid | | 1 | 1 | 1 | 1 | 1 | 1 | 1 | 1 |
| Antiaging agent⁽¹¹⁾ | | 2 | 2 | 2 | 2 | 2 | 2 | 2 | 2 |
| Vulcanization accelerator⁽¹²⁾ | | 2 | 2 | 3 | 3 | 3 | 3 | 3 | 3 |
| Vulcanization accelerator⁽¹³⁾ | | 2.2 | 2.2 | 2.2 | 2.2 | 2.2 | 2.2 | 2.2 | 2.2 |
| Sulfur | | 1.2 | 1.2 | 1.2 | 1.2 | 1.4 | 1.4 | 1.5 | 1.5 |
| Ultra-accelerator | | 0.2 | 0.2 | 0.2 | 0.2 | 0.2 | 0.2 | 0.2 | 0.2 |
| Unit is part by weight, and the numbers in parentheses in raw rubber are weights of raw rubber except for oil. | | | | | | | | | |
| (1) S-SBR: a solution-polymerized styrene butadiene rubber which was manufactured by a continuous method, in which coupled styrene was included in an amount of 38 to 42 wt%, vinyl was included in an amount of 26 to 30 wt%, and of which an end was modified into a glycidyl amino-based compound, wherein the solution-polymerized styrene butadiene rubber was used in a state that 50 parts by weight of oil was contained in the rubber with respect to 100 parts by weight of the rubber, and had a glass transition temperature of about -28 °C in a state that oil was contained in the rubber. | | | | | | | | | |
| (2) S-SBR: a solution-polymerized styrene butadiene rubber which was manufactured by a continuous method, in which coupled styrene was included in an amount of 34 to 38 wt%, vinyl was included in an amount of 36 to 40 wt%, and of which an end was modified into an amino silane-based compound, wherein the solution-polymerized styrene butadiene rubber was used in a state that 25 parts by weight of oil was contained in the rubber with respect to 100 parts by weight of the rubber, and had a glass transition temperature of about -21 °C in a state that oil was contained in the rubber. | | | | | | | | | |
| (3) S-SBR: a solution-polymerized styrene butadiene rubber which was manufactured by a continuous method, in which coupled styrene was included in an amount of 8 to 12 wt%, vinyl was included in an amount of 25 to 31 wt%, and of which an end was modified into an amino silane-based compound, wherein the solution-polymerized styrene butadiene rubber was used in a state that oil was not contained in the rubber, and had a glass transition temperature of about - 60 °C in a state that oil was contained in the rubber. | | | | | | | | | |
| (4) S-SBR: a solution-polymerized styrene butadiene rubber which was manufactured by a continuous method, in which coupled styrene was included in an amount of 13 to 17 wt%, vinyl was included in an amount of 23 to 27 wt%, and of which an end was modified into an amino silane-based compound, wherein the solution-polymerized styrene butadiene rubber was used in a state that 37.5 parts by weight of oil was contained in the rubber with respect to 100 parts by weight of the rubber, and had a glass transition temperature of about -60 °C in a state that oil was contained in the rubber. | | | | | | | | | |
| (5) BR: butadiene rubber having a glass transition temperature of about -106 °C | | | | | | | | | |
| (6) Silica: high dispersibility silica having a nitrogen adsorption specific surface area of about 170 m²/g and a CTAB adsorption specific surface area of about 160 m²/g | | | | | | | | | |
| (7) Coupling agent: bis(3-triethoxysilylpropyl)tetrasulfide (product name: Si69, manufacturer: Degussa) | | | | | | | | | |
| (8) Coupling agent: 3-mercaptopropyl-di(tridecane-1-oxy-13-penta(ethyleneoxide))ethoxysilane | | | | | | | | | |
| (9) First resin: phenolic resin having a softening point of 135 to 150 °C | | | | | | | | | |
| (10) Second resin: naphthenic resin having a softening point of 100 to 110 °C | | | | | | | | | |
| (11) Antiaging agent: N-(1,3-dimethylbutyl)-N'-phenyl-p-phenylenediamine | | | | | | | | | |
| (12) Vulcanization accelerator: diphenyleneguanidine (DPG) | | | | | | | | | |
| (13) Vulcanization accelerator: N-cyclohexyl-2-benzothiazylsulfenamide (CBS) | | | | | | | | | |

### [Experimental Example 1: Measuring physical properties of prepared rubber compositions]

After measuring physical properties of rubber specimens manufactured in Examples and Comparative Examples, measurement results are represented in the following Table 2.

**[Table 2]**

| | Comparative Example 1 | Comparative Example 2 | Example 1 | Example 2 | Example 3 | Example 4 | Example 5 | Example 6 |
|---|---|---|---|---|---|---|---|---|
| Mooney viscosity (ML1+4) | 78 | 80 | 81 | 79 | 73 | 72 | 68 | 66 |
| Hardness (Shore A) | 72 | 74 | 73 | 75 | 75 | 73 | 74 | 74 |
| 300% Modulus | 105 | 105 | 98 | 102 | 95 | 96 | 98 | 94 |
| Fracture energy | 168 | 162 | 172 | 169 | 182 | 187 | 192 | 194 |
| Wet Grip Index | 100 | 103 | 102 | 102 | 105 | 104 | 106 | 107 |
| 30 °C G* (E+06) | 10.2 | 11.1 | 10.2 | 11.2 | 11.8 | 11.5 | 12.3 | 12.0 |
| 60 °C tan δ | 0.173 | 0.182 | 0.173 | 0.178 | 0.182 | 0.175 | 0.171 | 0.176 |
| 60 °C G* (E+06) | 7.0 | 7.5 | 6.9 | 7.8 | 8.2 | 7.8 | 8.1 | 7.9 |
| Lambourn abrasion Index | 100 | 97 | 105 | 102 | 106 | 109 | 107 | 106 |

- Mooney viscosity (ML1+4(125 °C)) was measured in accordance with ASTM D1646. The lower a numerical value of Mooney viscosity as a value of exhibiting viscosity of nonvulcanized rubber is, the more excellent processability of the nonvulcanized rubber is.

- Hardness was measured in accordance with DIN 53505. The higher a value of the hardness which exhibits steering stability is, the more excellent the steering stability is.

- 300% modulus and fracture energy were measured in accordance with ISO 37. The higher a value of fracture energy which exhibits energy required when rubber is fractured is, the higher the required energy is. Accordingly, the rubber composition has excellent abrasion performance.

- G', G" and tan δ as viscoelasticity were measured from -60 °C to 60 °C using an ARES measuring device under 0.5% strain and 10 Hz frequency. The lower a numerical value of 60 °C tan δ which exhibits rolling resistance properties, the more excellent performance of the rubber composition is.

- The higher a numerical value of Wet Grip Index which exhibits braking characteristics on a wet road surface is, the more excellent braking performance of the rubber composition is.

- 30 °C/60 °C G* as rigidity of the rubber composition is associated with braking and handling performances on dry and wet road surfaces, and the higher a numerical value of 30 °C/60 °C G* is, the more excellent the rubber composition is.

- Lambourn abrasion index was measured at a grinding stone rotating speed of 50 mm/min using a Lambourn abrasion measuring device. The higher a numerical value of the Lambourn abrasion index is, the more favorable to abrasion performance the rubber composition is.

Referring to the foregoing Table 2, it can be confirmed that Examples 1 to 6 of the present disclosure provide rubber compositions which exhibit lower levels of Mooney viscosity (ML1+4) than Comparative Examples 1 and 2, and have improved fracture energy values while maintaining hardness and 300% modulus values. Further, it can be confirmed that Examples 1 to 6 provide rubber compositions having very significantly improved processability, steering stability (handling performance) and braking performance by improving Wet Grip Index and 30 °C/60 °C G* while maintaining the same levels of 60 °C tan δ as in Comparative Examples 1 and 2.

### [Experimental Example 2: Performance test of tire]

After manufacturing treads using rubbers manufactured in Examples and Comparative Examples, tires of 245 40ZR18 standard including the treads as semi-finished products were manufactured. After testing braking performance and rolling resistance of the tires on dry and wet road surfaces, relative ratios of test results of the tires in Examples 1 to 6 and Comparative Example 2 to those in Comparative Example 1 are represented in the following Table 3.

**[Table 3]**

| | Comparative Example 1 | Comparative Example 2 | Example 1 | Example 2 | Example 3 | Example 4 | Example 5 | Example 6 |
|---|---|---|---|---|---|---|---|---|
| Braking performance on a dry road surface | 100 | 103 | 101 | 102 | 105 | 104 | 108 | 106 |
| Braking performance on a wet road surface | 100 | 104 | 102 | 106 | 105 | 103 | 107 | 110 |
| Rolling resistance | 100 | 102 | 101 | 103 | 104 | 101 | 100 | 101 |

Referring to the foregoing Table 3, it can be confirmed that the tires of Examples 1 to 6 can realize braking performance and high handling performance on extremely dry and wet road surfaces while minimizing damages of low fuel consumption performance by maintaining the same levels of rolling resistance as that of an existing tire.

Hereinabove, exemplary embodiments of the present disclosure have been described in detail. However, the scope of the present disclosure is not limited thereto, but various changes or modified forms of those skilled in the art using a basic concept of the present disclosure defined in the following claims can also be within the scope of the present disclosure.

## Claims

1. A rubber composition for tire tread, the rubber composition comprising:
100 parts by weight of raw rubber;
100 to 150 parts by weight of silica; and
15 to 60 parts by weight of resin having a softening point of 100 to 150 °C, wherein the raw rubber includes a solution-polymerized styrene butadiene rubber comprising 8 to 30 wt% of styrene, having 20 to 35 wt% of vinyl contained in butadiene, and having a molecular weight distribution of 2 to 5,
wherein the solution-polymerized styrene butadiene rubber has a glass transition temperature of -70 to -30 °C, and
wherein the raw rubber is consisting of the solution--polymerized styrene butadiene rubber, consisting of two kinds of solution-polymerized styrene butadiene rubber with the different vinyl amount.

2. The rubber composition for tire tread of claim 1, wherein the glass transition temperature is a glass transition temperature of a case that 10 to 40 parts by weight of oil are added to 100 parts by weight of the solution-polymerized styrene butadiene rubber.

3. The rubber composition for tire tread of claim 1, wherein the silica has a nitrogen adsorption specific surface area of 150 to 300 m²/g, a CTAB adsorption specific surface area of 140 to 280 m²/g, and a hydrogen ion exponent of pH 5 to pH 8.

4. The rubber composition for tire tread of claim 1, wherein the resin includes 5 to 25 parts by weight of a first resin having a softening point of 110 to 150 °C and 10 to 40 parts by weight of a second resin having a softening point of 100 to 130 °C, and a weight ratio of the first resin to the second resin is 1:1 to 1:5.

5. The rubber composition for tire tread of claim 1, further comprising 5 to 15 parts by weight of a silane coupling agent with respect to 100 parts by weight of the raw rubber.

6. The rubber composition for tire tread of claim 5, wherein the silane coupling agent includes a sulfide-based silane compound and a mercapto-based silane compound, and a weight ratio of the sulfide-based silane compound to the mercapto-based silane compound is 1:1 to 1:2.

7. A tire manufactured by using the rubber composition for tire tread of claim 1.

## Patentansprüche

1. Kautschukzusammensetzung für eine Reifenlauffläche, wobei die Kautschukzusammensetzung
100 Gewichtsteile Rohkautschuk; 100 bis 150 Gewichtsteile Kieselsäure und
15 bis 60 Gewichtsteile Harz mit einem Erweichungspunkt von 100 bis 150 °C aufweist, wobei der Rohkautschuk einen lösungspolymerisierten Styrol-Butadien-Kautschuk umfasst, der 8 bis 30 Gew.-% Styrol aufweist, der 20 bis 35 Gew.-% in Butadien enthaltenem Vinyl enthält und eine Molekulargewichtsverteilung von 2 bis 5 aufweist,
wobei der lösungspolymerisierte Styrol-Butadien-Kautschuk eine Glasübergangstemperatur von -70 bis -30 °C aufweist, und wobei der Rohkautschuk aus dem lösungspolymerisierten Styrol-Butadien-Kautschuk besteht, der aus zwei Arten von lösungspolymerisiertem Styrol-Butadien-Kautschuk mit der unterschiedlichen Vinylmenge besteht.

2. Kautschukzusammensetzung für eine Reifenlauffläche nach Anspruch 1, wobei die Glasübergangstemperatur eine Glasübergangstemperatur für den Fall ist, dass 10 bis 40 Gewichtsteile Öl zu 100 Gewichtsteilen des lösungspolymerisierten Styrol-Butadien-Kautschuks hinzugefügt werden.

3. Kautschukzusammensetzung für eine Reifenlauffläche nach Anspruch 1, wobei die Kieselsäure eine spezifische Oberfläche für die Stickstoffadsorption von 150 bis 300 m²/g, eine spezifische Oberfläche für die CTAB-Adsorption von 140 bis 280 m²/g und einen Wasserstoffionenexponenten von pH 5 bis pH 8 aufweist.

4. Kautschukzusammensetzung für eine Reifenlauffläche nach Anspruch 1, wobei das Harz 5 bis 25 Gewichtsteile eines ersten Harzes mit einem Erweichungspunkt von 110 bis 150 °C und 10 bis 40 Gewichtsteile eines zweiten Harzes mit einem Erweichungspunkt von 100 bis 130 °C enthält und wobei das Gewichtsverhältnis des ersten Harzes zum zweiten Harz 1:1 bis 1:5 beträgt.

5. Kautschukzusammensetzung für eine Reifenlauffläche nach Anspruch 1, die weiterhin 5 bis 15 Gewichtsteile eines Silan-Kupplungsmittels, bezogen auf 100 Gewichtsteile des Rohkautschuks, umfasst.

6. Kautschukzusammensetzung für eine Reifenlauffläche nach Anspruch 5, wobei das Silan-Kupplungsmittel eine Silanverbindung auf Sulfidbasis und eine Silanverbindung auf Mercaptobasis einschließt und wobei das Gewichtsverhältnis der Silanverbindung auf Sulfidbasis zu der Silanverbindung auf Mercaptobasis 1:1 bis 1:2 beträgt.

7. Reifen, unter Verwendung der Kautschukzusammensetzung für eine Reifenlauffläche nach Anspruch 1 hergestellt.

## Revendications

1. Composition de caoutchouc pour une bande de roulement, la composition de caoutchouc comprenant :
100 parties en poids de caoutchouc brut ;
de 100 à 150 parties en poids de silice ; et
de 15 à 60 parties en poids de résine ayant un point de ramollissement de 100 à 150°C, où le caoutchouc brut comprend un caoutchouc styrène-butadiène polymérisé en solution comprenant de 8 à 30% en poids de styrène, ayant de 20 à 35% en poids de vinyle contenu dans le butadiène, et ayant une distribution de poids moléculaire de 2 à 5,
où le caoutchouc styrène-butadiène polymérisé en solution a une température de transition vitreuse de -70 à -30°C, et
où le caoutchouc brut est constitué du caoutchouc styrène-butadiène polymérisé en solution, constitué de deux types de caoutchouc styrène-butadiène polymérisé en solution avec la quantité de vinyle différente.

2. Composition de caoutchouc pour bande de roulement selon la revendication 1, où la température de transition vitreuse est une température de transition vitreuse d'un cas où de 10 à 40 parties en poids d'huile sont ajoutées à 100 parties en poids du caoutchouc styrène-butadiène polymérisé en solution.

3. Composition de caoutchouc pour bande de roulement selon la revendication 1, où la silice a une surface spécifique d'adsorption d'azote de 150 à 300 m²/g, une surface spécifique d'adsorption CTAB de 140 à 280 m²/g, et un exposant d'ions hydrogène de pH 5 à pH 8.

4. Composition de caoutchouc pour bande de roulement selon la revendication 1, où la résine comprend de 5 à 25 parties en poids d'une première résine ayant un point de ramollissement de 110 à 150°C et de 10 à 40 parties en poids d'une seconde résine ayant un point de ramollissement de 100 à 130°C, et un rapport pondéral de la première résine à la seconde résine est de 1:1 à 1:5.

5. Composition de caoutchouc pour bande de roulement selon la revendication 1, comprenant en outre de 5 à 15 parties en poids d'un agent de couplage silane par rapport à 100 parties en poids du caoutchouc brut.

6. Composition de caoutchouc pour bande de roulement selon la revendication 5, où l'agent de couplage silane comprend un composé silane à base de sulfure et un composé silane à base de mercapto, et un rapport pondéral du composé silane à base de sulfure au composé silane à base de mercapto est de 1:1 à 1:2.

7. Pneumatique fabriqué en utilisant la composition de caoutchouc pour la bande de roulement de la revendication 1.
